(19) Europäisches Patentamt
European Patent Office
Office européen des brevets

(11) EP 4 435 033 A1

(12) **EUROPEAN PATENT APPLICATION**
published in accordance with Art. 153(4) EPC

(43) Date of publication:
**25.09.2024 Bulletin 2024/39**

(21) Application number: **22895383.2**

(22) Date of filing: **26.10.2022**

(51) International Patent Classification (IPC):
***C08G 65/40*** *(2006.01)*

(52) Cooperative Patent Classification (CPC):
**C08G 65/40**

(86) International application number:
**PCT/JP2022/039942**

(87) International publication number:
**WO 2023/090099 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 JP 2021187923**
**25.08.2022 JP 2022134220**

(71) Applicants:
- **Honshu Chemical Industry Co., Ltd.**
**Tokyo 103-0027 (JP)**
- **Daikin Industries, Ltd.**
**Osaka-shi, Osaka 530-0001 (JP)**

(72) Inventors:
- **HASHIKAWA, Akihiro**
**Wakayama-shi, Wakayama 641-0007 (JP)**
- **SHIMODA, Tomoaki**
**Wakayama-shi, Wakayama 641-0007 (JP)**
- **NAKANO, Yasuhiro**
**Osaka-shi, Osaka 530-8323 (JP)**

(74) Representative: **Grünecker Patent- und Rechtsanwälte**
**PartG mbB**
**Leopoldstraße 4**
**80802 München (DE)**

(54) **PRODUCTION METHOD OF POLYETHER NITRILE**

(57) An object is to provide a method for producing a polyether nitrile having high heat resistance and excellent in mechanical properties such that the polyether nitrile has a high molecular weight and high flowability. As a solution, provided is a method for producing a polyether nitrile, in which in producing a polyether nitrile by allowing an aromatic dihydroxy compound (I) and a dihalobenzonitrile compound (II) to undergo a polycondensation reaction, the reaction is continued to a region where a polymer reduced viscosity of a parachlorophenol solution at 40°C decreases after exceeding 1 as the polycondensation proceeds and reaching a maximum.

FIG. 3

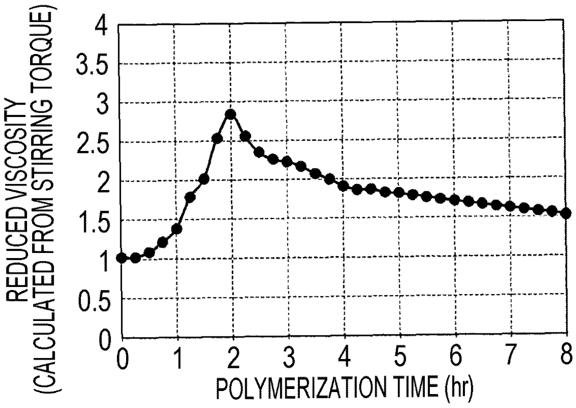


EP 4 435 033 A1

## Description

### Technical Field

The present invention relates to a method for producing a polyether nitrile having a high molecular weight and high flowability.

### Background Art

Aromatic ether copolymers are not only excellent in heat resistance, flame resistance, chemical resistance, and mechanical strength but also are thermoplastic and can be melt-molded by heating, and thus can provide various molded articles such as filaments, films, sheets, tubes, pipes, and round bars through molding methods such as injection molding, extrusion molding, and heat compression molding and are useful resins.

(Co)polymers are generally heated, melted, and kneaded with resin materials added and then formed into molding materials (resin compositions) such as pellets and chips, which are processed into various molded articles, but aromatic ether copolymers are useful as base resins for molding materials (resin compositions).

Polyether nitrile (e.g., PTLs 1 and 2), which is one of the aromatic ether copolymers, is a resin having the highest level of heat resistance and high mechanical strength among thermoplastic resins.

However, polyether nitrile has a very high melting point and needs to be molded at a high temperature close to 400°C. For higher mechanical properties, it is effective to increase the molecular weight of the resin, but such a resin disadvantageously has a higher melting temperature and poor flowability.

### Citation List

#### Patent Literature

PTL 1: Japanese Unexamined Patent Application Publication No. 60-147439
PTL 2: Japanese Unexamined Patent Application Publication No. 61-055120

### Summary of Invention

#### Technical Problem

An object of the present invention is to provide a method for producing a polyether nitrile having high heat resistance and excellent in mechanical properties such that the polyether nitrile has a high molecular weight and high flowability.

#### Solution to Problem

To achieve the above object, the present inventors have conducted intensive studies and found that a long-time polycondensation satisfying specific conditions provides a polyether nitrile having both a high molecular weight and high flowability (low viscosity), thereby completing the present invention.

The present invention is as follows.

1. A method for producing a polyether nitrile, including allowing an aromatic dihydroxy compound (I) and a dihalobenzonitrile compound (II) to undergo a polycondensation reaction in the presence of a basic compound,
wherein the reaction is continued to a region where a reduced viscosity of the polyether nitrile decreases after increasing beyond 1 as the polycondensation reaction proceeds and reaching a maximum.
2. The method for producing a polyether nitrile according to 1., wherein the reaction is continued to a region where the reduced viscosity decreases after increasing beyond 1.5 as the polycondensation reaction proceeds and reaching a maximum.
3. The method for producing a polyether nitrile according to 1., wherein the reaction is continued to a region where the reduced viscosity decreases after increasing beyond 1.75 as the polycondensation reaction proceeds and reaching a maximum.
4. The method for producing a polyether nitrile according to 1., wherein the reaction is continued to a region where the reduced viscosity decreases after increasing beyond 2.0 as the polycondensation reaction proceeds and reaching

a maximum.

5. The method for producing a polyether nitrile according to 1., wherein the aromatic dihydroxy compound (I) is a compound represented by general formula (1) below, and the dihalobenzonitrile compound (II) is a compound represented by general formula (2) below.

[Chem. 1]

**HO-R-OH** **(1)**

(In the formula, R represents a divalent group represented by general formula (1a) below or general formula (1b) below.)

[Chem. 2]

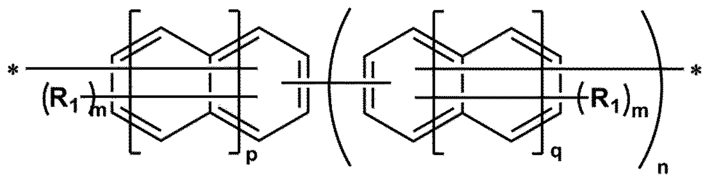

**(1a)**

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 3]

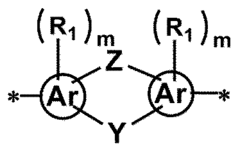

**(1b)**

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

[Chem. 4]

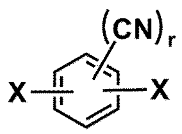

**(2)**

(In the formula, each X independently represents a halogen atom, and r represents an integer of 1 to 4.)

6. The method for producing a polyether nitrile according to 1., wherein R in the compound represented by general formula (1) is general formula (1a') below or general formula (1a") below.

[Chem. 5]

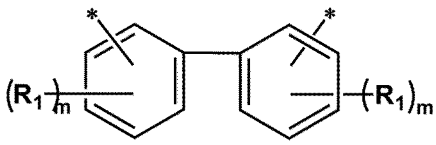

(1a')

[Chem. 6]

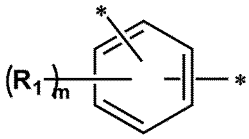

(1a")

(In the formula, $R_1$, m, and * are as defined in general formula (1a).)

7. The method for producing a polyether nitrile according to 1. or 5., wherein in the polycondensation reaction, a molar ratio between the aromatic dihydroxy compound (I) and the dihalobenzonitrile compound (II) is in a range of (I):(II) = 1:0.99 to 1:1.005.

8. The method for producing a polyether nitrile according to 1., wherein in the polycondensation reaction, the basic compound is an alkali metal compound and is used in an amount ranging from 2 to 4 times an amount of the aromatic dihydroxy compound (I) on a molar basis in terms of alkali metal ions contained in the alkali metal compound.

9. The method for producing a polyether nitrile according to 1., wherein the polyether nitrile to be obtained has a weight-average molecular weight (Mw) in a range of 40,000 to 1,000,000 and a weight-average molecular weight (Mw) to number-average molecular weight (Mn) ratio (Mw/Mn) in a range of 2.7 to 4.0.

Advantageous Effects of Invention

According to the production method according to the present invention, a polyether nitrile excellent in heat resistance and mechanical properties can be obtained as a polyether nitrile having both a high molecular weight and high flowability (low viscosity), which is very useful. Brief Description of Drawing

[Fig. 1] Fig. 1 is a graph showing how the reduced viscosity calculated from a stirring torque varies with polycondensation time in Comparative Example 1.

[Fig. 2] Fig. 2 is a graph showing how the reduced viscosity calculated from a stirring torque varies with polycondensation time in Example 1.

[Fig. 3] Fig. 3 is a graph showing how the reduced viscosity calculated from a stirring torque varies with polycondensation time in Example 2.

Description of Embodiments

The present invention is a method for producing a polyether nitrile, including allowing an aromatic dihydroxy compound (I) and a dihalobenzonitrile compound (II) to undergo a polycondensation reaction in the presence of a basic compound. In the method, the reaction is continued to a region where a reduced viscosity of the polyether nitrile decreases after increasing beyond 1 as the polycondensation reaction proceeds and reaching a maximum. For the reduced viscosity, from the viewpoint of providing a polyether nitrile having a higher weight-average molecular weight, the reaction is preferably continued to a region where the reduced viscosity decreases after increasing beyond 1.5 and reaching a maximum, the reaction is more preferably continued to a region where the reduced viscosity decreases after increasing beyond 1.75 and reaching a maximum, and the reaction is particularly preferably continued to a region where the reduced viscosity decreases after increasing beyond 2.0 and reaching a maximum.

The "reduced viscosity" in the present invention refers to a value determined as described below.

In 5 g of parachlorophenol, 0.1 g of a sample is dissolved at 180°C, and the solution is transferred to a 10 mL measuring flask. The flask is made up to volume at 40°C, and the resultant is weighed out with a 5 mL whole pipette and put into an Ostwald tube (capillary tube, 0.75 mm). This is allowed to stand in a constant-temperature bath at 40.0°C for 15 minutes, and a flow time T is measured to make a calculation by the following calculation formula. The value obtained by this calculation is a "reduced viscosity $\eta_{red}$".

[Calculation formula] Reduced viscosity $\eta_{red} = \{(T/T_0) - 1\}/C$

C: concentration (g/dL) of solution
T: flow time (s) of sample solution
$T_0$: flow time (s) of parachlorophenol

The method of determining the progress of the polycondensation reaction during the execution of the production method according to the present invention is as follows: a portion of a polycondensation reaction solution is sampled and washed to obtain a polymer, and the reduced viscosity of the polymer is determined as described above.

The "reduced viscosity" in the present invention has been confirmed to correlate with the torque for stirring a polycondensation reaction solution in polycondensation, as will be described in detail in EXAMPLES given later. That is, during the execution of the production method according to the present invention, a method in which the increase or decrease in the reduced viscosity of a polymer is determined by measuring the torque for stirring a polycondensation reaction solution can be employed.

For example, a polycondensation reaction solution during polycondensation is experimentally sampled in advance at various desired time points, and the stirring torque value measured with a torque meter at each sampling time point and the reduced viscosity of a polymer obtained by washing each sample are actually measured. From the actually measured values, the following relationship between the stirring torque and the polymer reduced viscosity is determined, and the reduced viscosity during polycondensation can be determined by estimation from the stirring torque.

In EXAMPLES given later, it has been confirmed that the reduced viscosity in the present invention and the measured stirring torque are expressed by the relational expression "reduced viscosity (dl/g) = A × stirring torque (N·m) + B". A and B in the relational expression are values that depend on the reactor, stirring blade, motor, and reaction conditions used.

When a compound represented by general formula (1) described later as the aromatic dihydroxy compound (I) and a compound represented by general formula (2) described later as the dihalobenzonitrile compound (II) are allowed to undergo a polycondensation reaction in the presence of a basic compound, a polyether nitrile having a repeating unit represented by general formula (3) below is obtained. The reaction formula in this case is shown below.

[Chem. 7]

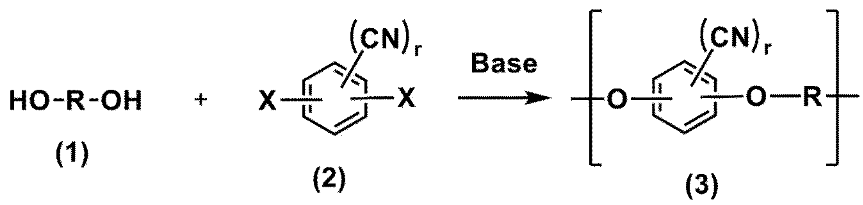


(1) (2) (3)

(In the formula, R, X, and r are as defined in general formulae (1) to (3).)

Alternatively, the polycondensation reaction may be performed using a presynthesized alkali metal salt of the aromatic dihydroxy compound (I) and the dihalobenzonitrile compound (II).

In producing the polyether nitrile, the polycondensation reaction may be performed through divided steps of an oligomer formation step (A) and a polymerization step (B), in which the reaction is performed in different ways, or through a single undivided step.

The oligomer formation step (A) is a step of allowing the aromatic dihydroxy compound (I) and the dihalobenzonitrile compound (II) to undergo a polycondensation reaction in the presence of a basic compound to form an oligomer. The oligomer in this case is not particularly limited, and a polycondensation reaction product having a polymer reduced viscosity of about less than 1 is referred to as an oligomer.

The polymer formation step (B) is a step of further subjecting the oligomer obtained in the step (A) to the polycondensation reaction to form a polymer. As the oligomer at this time, the polycondensation reaction solution in the step (A) can be used as it is, or an oligomer isolated by additionally performing the step (A) can also be used.

The polycondensation reaction involves an operation to remove water generated during a desalting reaction out of the system. The method of the operation is, for example, a method in which the reaction is run at a temperature at which the desalting reaction proceeds in the presence of a solvent that forms an azeotrope with water, and during the reaction, water is distilled off the reaction mixture by means of the solvent that forms an azeotrope with water. This allows the reaction to be maintained in a substantially anhydrous state. The temperature at which the desalting reaction starts is typically around 130°C, while depending on the raw materials. For example, in the case of using 4,4'-biphenol

as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 130°C to 170°C.

When the reaction is continued, it is preferable to maintain the reaction system in a substantially anhydrous state while removing water produced as a result of the reaction. When the water produced is not sufficiently removed, the water may react with the dihalobenzonitrile compound (II) to form a by-product having a phenol skeleton, resulting in the production of a low-molecular-weight product alone. That is, to obtain a high-molecular-weight polyether nitrile, the reaction system preferably contains substantially no water, preferably less than 0.5 wt% of water.

The polycondensation reaction is performed in an inert atmosphere, such as a nitrogen atmosphere, under atmospheric pressure, but a higher or lower pressure may be used.

In the production method according to the present invention, the reaction is continued to a region where a reduced viscosity of the polyether nitrile decreases after increasing beyond 1 as the polycondensation reaction proceeds and reaching a maximum.

<Aromatic dihydroxy compound (I)>

The aromatic dihydroxy compound (I) in the present invention includes all aromatic compounds having two hydroxy groups, among which a compound represented by general formula (1) below is preferred.

[Chem. 8]

**HO-R-OH** **(1)**

(In the formula, R represents a divalent group represented by general formula (1a) below or general formula (1b) below.)

[Chem. 9]

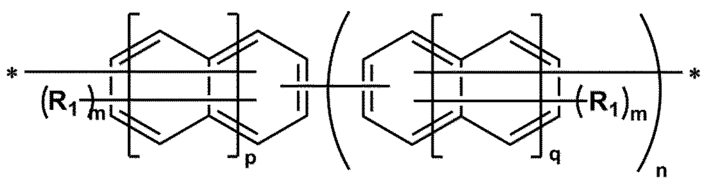

**(1a)**

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 10]

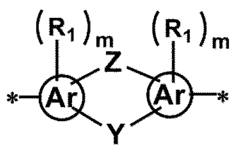

**(1b)**

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

Each $R_1$ in general formula (1a) independently represents a linear or branched alkyl group having 1 to 6 carbon atoms, a cyclic alkyl group having 5 or 6 carbon atoms, or a phenyl group, preferably a linear or branched alkyl group having 1 to 4 carbon atoms, a cyclic alkyl group having 5 or 6 carbon atoms, or a phenyl group, more preferably a linear or branched alkyl group having 1 to 4 carbon atoms or a phenyl group, particularly preferably an alkyl group having one carbon atom, that is, a methyl group.

In general formula (1a), m represents an integer of 0 to 4, preferably an integer 0, 1, or 2, more preferably 0 or 1, particularly preferably 0.

In general formula (1a), n represents 0 or 1, preferably 1.

In general formula (1a), p and q each independently represent 0, 1, or 2, preferably 0 or 1, particularly preferably 0.

General formula (1a) above where n is 1 and p and q are 0 is represented as general formula (1a').

[Chem. 11]

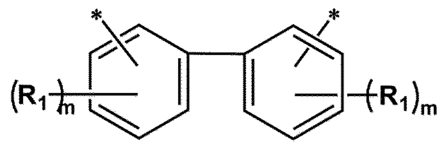

(1a')

(In the formula, $R_1$, m, and * are as defined in general formula (1a).)

In general formula (1a'), the position of bonding to OH in general formula (1) is preferably the ortho or para position, particularly preferably the para position, with respect to the position of direct bonding between the two benzene rings. When m is 1 or 2, the bonding position of $R_1$ is preferably the meta position with respect to the position of direct bonding between the two benzene rings. Preferred examples of $R_1$ and m are the same as those in general formula (1a).

General formula (1a) above where n, p, and q are 0 is represented as general formula (1a") below.

[Chem. 12]

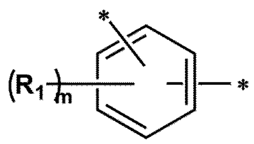

(1a")

(In the formula, $R_1$, m, and * are as defined in general formula (1a).)

In general formula (1a"), the position of bonding to OH in general formula (1) is preferably the para or meta position, particularly preferably the para position, with respect to the other bonding position. Preferred examples of $R_1$ and m are the same as those in general formula (1a).

General formula (1a) where n is 1 and p and q are 0, that is, general formula (1a'), or general formula (1a) where n, p and q are 0, that is, general formula (1a"), are preferred.

$R_1$ and m in general formula (1b) are as defined in general formula (1a), and preferred examples are also the same.

Y in general formula (1b) represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, and the cycloalkylidene group having 5 to 15 carbon atoms may include a branched-chain alkyl group. Specific examples of the cycloalkylidene group include a cyclopentylidene group (5 carbon atoms), a cyclohexylidene group (6 carbon atoms), a 3-methylcyclohexylidene group (7 carbon atoms), a 4-methylcyclohexylidene group (7 carbon atoms), a 3,3,5-trimethylcyclohexylidene group (9 carbon atoms), a cycloheptylidene group (7 carbon atoms), and a cyclododecanylidene group (12 carbon atoms).

Y in general formula (1b) is preferably a sulfonyl group, a carbonyl group, an alkylidene group having 1 to 6 carbon atoms, a fluorine-containing alkylidene group having 2 to 6 carbon atoms, a cycloalkylidene group having 5 to 12 carbon atoms, a phenylmethylidene group, a phenylethylidene group, a phenylene group, or a fluorenylidene group, more preferably a sulfonyl group, a carbonyl group, an alkylidene group having 1 to 3 carbon atoms, a fluorine-containing alkylidene group having 2 or 3 carbon atoms, a cycloalkylidene group having 6 to 12 carbon atoms, a phenylmethylidene group, or a fluorenylidene group, still more preferably an alkylidene group having 3 carbon atoms, that is, a propylidene group, a fluorine-containing alkylidene group having 3 carbon atoms, that is, a fluorine-containing propylidene group, a cycloalkylidene group having 6 to 12 carbon atoms, or a fluorenylidene group, particularly preferably a 2,2'-isopropylidene group, a 2,2'-hexafluoroisopropylidene group, a cyclohexylidene group, a 3,3,5-trimethylcyclohexylidene group, a cyclododecanylidene group, or a fluorenylidene group.

Z in general formula (1b) represents an oxygen atom, a sulfur atom, or non-bridging, preferably an oxygen atom or non-bridging, more preferably non-bridging.

Each Ar in general formula (1b) independently represents an aryl group having 6 to 8 carbon atoms, more preferably an aryl group having 6 carbon atoms.

R in general formula (1) is preferably a divalent group represented by general formula (1a), more preferably a divalent group represented by general formula (1a') or a divalent group represented by general formula (1a"), particularly

preferably a divalent group represented by general formula (1a').

Specific examples of the aromatic dihydroxy compound (I) in the present invention include hydroquinone, resorcin, 2-phenylhydroquinone, 4,4'-biphenol, 3,3'-biphenol, 2,6-dihydroxynaphthalene, 2,7-dihydroxynaphthalene, 1,1'-bi-2-naphthol, 2,2'-bi-1-naphthol, 1,3-bis[1-methyl-1-(4-hydroxyphenyl)ethyl]benzene, 1,4-bis[1-methyl-1-(4-hydroxyphenyl)ethyl]benzene, 1,3-(4-hydroxybenzoylbenzene), 1,4-(4-hydroxybenzoylbenzene), 1,3-bis(4-hydroxyphenoxy)benzene, 1,4-bis(4-hydroxyphenoxy)benzene, 1,4-bis(4-hydroxyphenyl)benzene, 1,3-bis(4-hydroxyphenyl)benzene, 4,4'-isopropylidene biphenol (Bis-A), 2,2-bis(4-hydroxyphenyl)-1,1,1,3,3,3-hexafluoropropane, 4,4'-bishydroxybenzophenone, 4,4'-bishydroxydiphenylsulfone, 4,4'-dihydroxydiphenyl ether, bis(4-hydroxyphenyl)methane, 9,9-bis(4-hydroxyphenyl)fluorene, 9,9-bis(3-phenyl-4-hydroxyphenyl)fluorene, 9,9-bis(3,5-diphenyl-4-hydroxyphenyl)fluorene, 9,9-bis(4-hydroxy-3-methylphenyl)fluorene, 9,9-bis(4-hydroxy-3,5-dimethylphenyl)fluorene, 9,9-bis(4-hydroxy-3-cyclohexylphenyl)fluorene, 4,4'-isopropylidene bis(2-phenylphenol), bisphenol Z (1,1-bis(4-hydroxyphenyl)cyclohexane), bisphenol TMC (1,1-bis(4-hydroxyphenyl)-3,3,5-trimethylcyclohexane), 1,1-bis(4-hydroxyphenyl)cyclododecane, and 1,1-bis(4-hydroxyphenyl)-1-phenylethane.

Of these, hydroquinone, resorcin, and 4,4'-biphenol are preferred, and 4,4'-biphenol is particularly preferred.

<Dihalobenzonitrile compound (II)>

The dihalobenzonitrile compound (II) in the present invention includes all nitrile compounds having two halogen groups, among which a compound represented by general formula (2) below is preferred.

[Chem. 13]

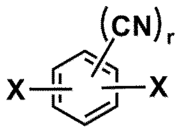

(2)

(In the formula, each X independently represents a halogen atom, and r represents an integer of 1 to 4.)

Each X in general formula (2) above independently represents a halogen atom, preferably independently represents a chlorine atom, a bromine atom, or an iodine atom, more preferably independently represents a chlorine atom or a bromine atom, particularly preferably represents a chlorine atom.

In general formula (2) above, r represents an integer of 1 to 4, preferably 1 or 2, more preferably 1. When r is 1, a structural configuration in which halogen atoms are bonded to both the ortho positions with respect to the cyano group is preferred.

Specific examples of the dihalobenzonitrile compound (II) in the present invention include 2,6-difluorobenzonitrile, 2,5-difluorobenzonitrile, 2,4-difluorobenzonitrile, 2,6-dichlorobenzonitrile, 2,5-dichlorobenzonitrile, 2,4-dichlorobenzonitrile, 2,6-dibromobenzonitrile, 2,5-dibromobenzonitrile, 2,4-dibromobenzonitrile, 2,6-dinitrobenzonitrile, 2,5-dinitrobenzonitrile, 2,4-dinitrobenzonitrile, and 1,4-dichloro-2,5-dicyanobenzene. The dihalobenzonitrile compound (II) may also be a reactive derivative thereof. Of these, 2,6-difluorobenzonitrile and 2,6-dichlorobenzonitrile are suitable for use from the viewpoint of, for example, reactivity and economic efficiency. These compounds may also be used in combination of two or more.

Examples of the reactive derivative include, in the case of structures derived from 2,6-dihalobenzonitrile, compounds that can react with aromatic dihydroxy compounds as represented by the following general formulae, and these mean compounds derived from the reactions between two 2,6-dihalobenzonitriles and between 2,6-dihalobenzonitrile and an aromatic dihydroxy compound.

[Chem. 14]

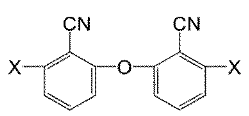

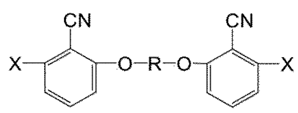

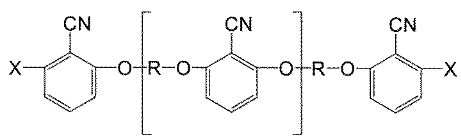

(In the formula, R is as defined in general formula (1), and X is as defined in general formula (2).)

<Amount of raw material used>

In the production method according to the present invention, the aromatic dihydroxy compound (I) is used at a molar ratio preferably in the range of 0.99 to 1.005, more preferably in the range of 0.995 to 1.005, still more preferably in the range 0.998 to 1.002, particularly preferably in the range of 0.999 to 1.001, relative to the dihalobenzonitrile compound (II). To maximize the polycondensation rate in the above step (B), the aromatic dihydroxy compound (I) and the dihalobenzonitrile compound (II) are preferably used at a molar ratio of substantially 1.000.

The aromatic dihydroxy compound (I) and the dihalobenzonitrile compound (II) used may each be one single compound or a combination of two or more compounds. When two or more compounds are used for each, they are used such that the molar ratio between the total amount of the compounds as the aromatic dihydroxy compound (I) and the total amount of the compounds as the dihalobenzonitrile compound (II) is as described above.

<Basic compound>

The basic compound may be any organic or inorganic compound as long as it promotes the desalting polycondensation reaction and does not affect the quality, but is preferably an inorganic compound, especially preferably an alkali metal compound or an alkaline-earth metal compound, particularly preferably an alkali metal compound.

Organic bases include tetramethylammonium hydroxide, triethylamine, N,N-diisopropylethylamine, 1,1,3,3-tetramethylguanidine (TMG), N,N-dimethyl-4-aminopyridine (DMAP), 2,6-lutidine, pyridine, 1,8-diazabicyclo[5.4.0]-7-undecene (DBU), 1,5-diazabicyclo[4.3.0]-5-nonene (DBN), 7-methyl-1,5,7-triazabicyclo[4.4.0]dec-5-ene (MTBD), 1,5,7-triazabicyclo[4.4.0]dec-5-ene (TBD), 1,8-bis(dimethylaminonaphthalene) (DMAN), 1,4-diazabicyclo[2.2.2]octane (DABCO), tert-butylimino-tri(pyrrolidino)phosphorane, tert-butylimino-tris(dimethylamino)phosphorane, 2-tert-butylimino-2-diethylamino-1,3-dimethylperhydro-1,3,2-diazaphosphorine, tert-octylimino-tris(dimethylamino)phosphorane, phosphazene base $P_2$-Et, phosphazene base $P_2$-t-Bu, phosphazene base $P_3$-t-Bu, phosphazene base $P_4$-t-Bu, and phosphazene base $P_4$-t-Oct.

Among inorganic bases, alkali metal compounds include alkali metals such as lithium, rubidium, cesium, potassium, and sodium; alkali metal hydrides such as lithium hydride, rubidium hydride, cesium hydride, potassium hydride, and sodium hydride; alkali metal hydroxides such as lithium hydroxide, rubidium hydroxide, cesium hydroxide, potassium hydroxide, and sodium hydroxide; alkali metal carbonates such as lithium carbonate, rubidium carbonate, cesium carbonate, potassium carbonate, and sodium carbonate; and alkali metal hydrogen carbonates such as lithium hydrogen carbonate, rubidium hydrogen carbonate, cesium hydrogen carbonate, potassium hydrogen carbonate, and sodium hydrogen carbonate. These may be used alone or in combination of two or more.

By using these alkali metal compounds having a specific surface area of 0.3 $m^2/g$ or more, the desalting polycondensation reaction can be performed with high efficiency. The specific surface area of the alkali metal compound catalyst is preferably 0.8 $m^2/g$ or more, more preferably 1.2 $m^2/g$ or more. By using an alkali metal compound having a larger specific surface area, the chance of contact between the catalyst and the reaction raw materials is further increased, and the desalting polycondensation reaction can be performed with higher efficiency. When the specific surface area is smaller than 0.3 $m^2/g$, the desalting polycondensation reaction cannot be performed with sufficiently high efficiency unless the amount of catalyst is increased, but an increase in the amount of catalyst is not preferred because the polycondensate quality is affected.

From the above, the basic compound in the production method according to the present invention is preferably an alkali metal carbonate such as lithium carbonate, rubidium carbonate, cesium carbonate, potassium carbonate, or sodium carbonate, more preferably lithium carbonate, potassium carbonate, or sodium carbonate, particularly preferably potassium carbonate or sodium carbonate having a specific surface area of 0.3 $m^2/g$ or more from the viewpoint of availability.

The amount of basic compound used in the production method according to the present invention, for example, in the case of an alkali metal compound, is usually preferably at least 2 times that of the aromatic dihydroxy compound (I) on a molar basis in terms of alkali metal ions contained, but side reactions such as ether bond cleavage will occur during the polycondensation if a large excess of the alkali metal compound is used. Thus, the amount used is more preferably in the range of 2 to 4 times, still more preferably in the range of 2 to 2.4 times, particularly preferably in the range of 2 to 2.2 times, on a molar basis.

<Solvent>

In the production method according to the present invention, a reaction solvent can be used, and it is preferable to use an aprotic solvent as the reaction solvent.

Specific examples of the aprotic solvent include N,N-dimethylacetamide, N,N-dimethylformamide, N-methyl-2-pyrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, dialkoxybenzenes (the number of carbon atoms in the alkoxy group, 1 to 4), and trialkoxybenzenes (the number of carbon atoms in the alkoxy group, 1 to 4). Among these solvents, high-permittivity polar organic solvents such as N-methyl-2-pyrolidone, N,N-dimethylacetamide, sulfolane, diphenyl sulfone, and dimethyl sulfoxide are particularly suitable for use. These may be used alone or in combination of two or more.

The amount of aprotic solvent used is not particularly limited as long as the raw materials are homogeneously dissolved and the alkali metal salt is stirred and dispersed well. Any amount that maximizes the volume efficiency of a polycondensation reactor may be chosen according to the raw materials used and the target polymer. Typically, the amount is chosen in the range of 0.5 to 20 times the total weight of the raw materials and the alkali metal salt.

Specific examples of the solvent that forms an azeotrope with water include aromatic hydrocarbons such as benzene, toluene, xylene, hexane, cyclohexane, octane, chlorobenzene, dioxane, tetrahydrofuran, anisole, and phenetole. These may be used alone or in combination of two or more.

When the solvent that forms an azeotrope with water is used, it is preferable to use the solvent that forms an azeotrope with water in an amount in the range of 1 to 100 parts by weight relative to 100 parts by weight of the aprotic solvent, more preferably in the range of 1 to 10 parts by weight, still more preferably in the range of 2 to 5 parts by weight, from the viewpoint of volume efficiency and solvent recovery.

<Reaction temperature>

The reaction temperature in the polycondensation reaction is in the range of 140°C to 300°C. Within this range, the reaction may be continued at a constant temperature, or the temperature may be increased as the polycondensation reaction proceeds.

When the polycondensation reaction is performed through divided steps of the oligomer formation step (A) and the polymerization step (B), the reaction temperature in the oligomer formation step (A) is preferably in the range of 140°C to 200°C, more preferably in the range of 150°C to 170°C, still more preferably in the range of 155°C to 165°C, and the reaction temperature in the polymerization step (B) is preferably in the range of 200°C to 300°C, more preferably in the range of 210°C to 270°C, still more preferably in the range of 210°C to 240°C, particularly preferably in the range 215°C to 230°C.

For example, in the case of using 4,4'-biphenol as the aromatic dihydroxy compound (I), 2,6-dichlorobenzonitrile as the dihalobenzonitrile compound (II), potassium carbonate, sulfolane (boiling point, 285°C) as an aprotic solvent, and toluene as the solvent that forms an azeotrope with water, the reaction temperature is preferably in the range of 190°C to 280°C.

For the reaction time of the polycondensation reaction in the present invention, the reaction is continued until the reduced viscosity of the polyether nitrile decreases after increasing beyond 1 as the polycondensation proceeds and reaching a maximum, and the reaction can be continued after the start of the decrease. Although depending on the reaction conditions and the raw materials used, the reaction time is typically 3 to 20 hours.

When the polycondensation reaction is performed through divided steps of the oligomer formation step (A) and the polymerization step (B), the reaction time of the step (A), while the reaction is preferably continued until carbon dioxide and water are not substantially produced, is not particularly limited. It is typically 1 to 6 hours, preferably 2 to 4 hours. In the step (B), likewise, the reaction is continued until the reduced viscosity of the polyether nitrile decreases after increasing beyond 1 and reaching a maximum, and the reaction can be continued after the start of the decrease.

Specifically, although depending on the reaction conditions and the raw materials used, the reaction time is 2 to 12 hours, preferably 2 to 10 hours, still more preferably 2 to 9 hours from the time when the reduced viscosity of the polyether nitrile has reached 1.

(Treatment after reaction)

After completion of the polycondensation reaction, the polycondensation reaction product is taken out from the reactor, solidified by cooling, then pulverized, and subjected to subsequent cleaning, drying, and molding material (pellet or chip) production steps; alternatively, the product taken out from the reactor may be directly put into a cleaning tank in the cleaning step, or a solvent for use in the cleaning step described below may be poured into the reactor after completion of the polycondensation reaction to transfer the product in slurry form or wax form to the cleaning step.

The cleaning step is a step of performing cleaning to remove a salt, a reaction solvent, and the like contained in the polycondensation reaction product obtained by the polycondensation reaction.

In this cleaning step, preferably, the reaction solvent in the polycondensation reaction product is subjected to extraction cleaning by a known method using a solvent such as an alcohol, a ketone, an aromatic hydrocarbon, an

aliphatic hydrocarbon, or water, and then the salt resulting from the desalting reaction in the polycondensation reaction product is removed by cleaning with preferably water.

In a specific operation, the polycondensation reaction product in pulverized, slurry, or wax form is transferred to a container equipped with a stirrer, and an operation of stirring cleaning with a cleaning solvent and filtration is repeated until the contents of the reaction solvent and the salt fall below the desired levels.

As an apparatus, for example, a combination of a cleaning tank with a pressure filter or a centrifuge, or a multifunctional filtration system capable of performing cleaning, filtration, and drying by itself may be used.

Specific examples, excluding water, of solvents for extraction cleaning of the reaction solvent include alcohols such as methanol, ethanol, propyl alcohol, isopropyl alcohol, butyl alcohol, isobutyl alcohol, sec-butyl alcohol, t-butyl alcohol, n-amyl alcohol, isoamyl alcohol, t-amyl alcohol, n-hexyl alcohol, cyclohexanol, n-octyl alcohol, and capryl alcohol; ketones such as acetone, methyl ethyl ketone, methyl n-propyl ketone, diethyl ketone, 2-hexanone, 3-hexanone, methyl-t-butyl ketone, di-n-propyl ketone, diisopropyl ketone, diisobutyl ketone, di-n-amyl ketone, diacetyl, acetylacetone, cyclohexanone, and benzophenone; aliphatic hydrocarbons including saturated aliphatic hydrocarbons such as n-hexane, 2-methylhebtane, 3-methylhebtane, 2,2-dimethylbutane, 2,3-dimethylbutane, n-hebtane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, and cyclohexane and unsaturated hydrocarbons such as 1-hexene, 1-heptene, 1-octene, and cyclohexene; and aromatic hydrocarbons such as benzene, toluene, o-xylene, m-xylene, p-xylene, ethylbenzene, n-propylbenzene, cumene, n-butylbenzene, t-butylbenzene, styrene, and allylbenzene.

Of these, for example, methanol, ethanol, acetone, methyl ethyl ketone, xylene, and toluene are preferred, and acetone and methanol are particularly preferred in terms of operability and ease of distillation recovery of the reaction solvent after cleaning.

For the cleaning of the alkali metal salt such as potassium chloride resulting from the desalting polycondensation reaction, water is preferably used, or acidic water containing oxalic acid or acetic acid at a low concentration may be used.

For the conditions of this cleaning step, the amount of cleaning solvent used, the number of times of cleaning, and the cleaning temperature may be appropriately selected according to the amounts of residual reaction solvent and residual alkali metal salt desired to be removed.

The drying step is a step of drying the polycondensation reaction product obtained by the above cleaning step.

The water-containing polycondensation reaction product that has been through the cleaning is dried by a known method. As a dryer, a known apparatus such as an evaporator, a shelf-type oven, or a tumbler can be used.

The target water content is typically 0.5 wt% or less, preferably 0.4 wt% or less, still more preferably 0.3 wt% or less.

This drying step may be performed under any conditions as long as the temperature is equal to or lower than the melting point of the polycondensation reaction product and water can be removed. To avoid contact with air as much as possible, the drying step is preferably performed under reduced pressure in an inert gas (e.g., nitrogen or argon) atmosphere or under a stream of inert gas.

The weight-average molecular weight (Mw) of the polyether nitrile obtained by the production method according to the present invention depends on the intended use and is not particularly limited, but is in the range of 40,000 to 1,000,000, preferably in the range of 50,000 to 500,000, more preferably in the range of 60,000 to 300,000. If the molecular weight of the polymer obtained is less than 40,000, the polymer has poor mechanical strength, and if it is 1,000,000 or more, the polymer is difficult to mold, which are not preferred.

The ratio of a weight-average molecular weight (Mw) to a number-average molecular weight (Mn), Mw/Mn, is in the range of 2.7 to 4.0, preferably in the range of 2.8 to 3.5, more preferably in the range of 2.9 to 3.5, particularly preferably in the range of 3.0 to 3.5.

The polycondensation reaction product dried in the above drying step is basically a powder; thus, to produce a molded article, this powder can be used to produce a molding material (pellets, chips, or the like). The method of producing a molding material by melting the polyether nitrile powder by heating is not particularly limited, but is preferably performed under exclusion of oxygen or in an inert atmosphere such as nitrogen.

For the production of a molding material such as pellets or chips, a melt-kneading apparatus such as a single-screw, twin-screw, or multi-screw extruder, a Banbury mixer, a kneader, or a roller is typically used, but a molding material such as pellets or chips may be produced by cutting a sheet prepared using a compression molding machine as used in Examples described later.

An industrially preferred process in producing a molding material is as follows. The polyether nitrile powder obtained through polycondensation, pulverization, cleaning, and vacuum drying is directly transferred to, for example, a silo sealed with nitrogen gas or the like and stored there without being exposed to the outside air. When formed into a shape such as pellets or chips, the powder is transferred to an extruder together with nitrogen gas through a pipe without any treatment. The powder is then melt-kneaded in no contact with oxygen (air), and a molten polymer from a die is pelletized by cutting in water or water-cooled cutting of a strand.

For the conditions of the process of producing this molding material (pellets or chips), in melt processing, the

operation described above is performed at a temperature sufficient to melt the polymer. The upper limit of the temperature in the melt processing is 500°C or lower. The polyether nitrile powder used in Examples, which is obtained using biphenol, has a melting point of 364°C and thus is preferably processed at a temperature higher than the melting point, 380°C or higher. The upper limit of the temperature is preferably 480°C or lower, more preferably 450°C or lower, still more preferably 430°C or lower, particularly preferably 400°C or lower.

The polyether nitrile powder or molding material obtained by the production method according to the present invention may be mixed with at least one selected from the group consisting of a thermoplastic resin material (A), an additive (B), and a filler (C) to provide a polyether nitrile resin composition.

The polyether nitrile resin composition can be produced in the same manner as the above-described process of producing a molding material. For the mixing of the components, methods such as 1) preliminarily mixing the polyether nitrile powder or preformed polyether nitrile molding material and other components ((A) to (C) described above) and then transferring the mixture to an extruder, 2) preliminarily preparing molding materials of a plurality of polyether nitrile resin compositions having different compositions using the polyether nitrile powder or preformed polyether nitrile molding material and other components ((A) to (C) above), mixing the molding materials in predetermined amounts so as to give a desired content ratio, and then transferring the mixture to an extruder, 3) directly feeding the polyether nitrile powder or preformed polyether nitrile molding material and other components ((A) to (C) above) into an extruder can be employed, and these methods are preferably performed in an inert atmosphere.

Specific examples of the thermoplastic resin material (A) contained in the polyether nitrile resin composition include high-density polyethylene, medium-density polyethylene, isotactic polypropylene, acrylonitrile-butadiene-styrene (ABS) resin, acrylonitrile-styrene (AS) resin, acrylic resin, fluorocarbon resin (e.g., polytetrafluoroethylene), polyester, polycarbonate, polyarylate, aliphatic polyamide, aromatic polyamide, polysulfone, polyether sulfone, polyether ketone, polyether ether ketone, polyphenylene sulfide, polyetherimide, polyamide-imide, polyesterimide, and modified polyphenylene oxide.

Specific examples of the additive (B) contained in the polyether nitrile resin composition include hydrophilic agents, antioxidants, secondary antioxidants, flame retardants, flame retardant aids, plasticizers, lubricants, release agents, antifogging agents, weathering stabilizers, light stabilizers, hydrolysis resistance improvers, flowability improvers, UV absorbers, antistatic agents, metal deactivators, near-infrared absorbers, and colorants (dyes and pigments).

Specific examples of the filler (C) contained in the polyether nitrile resin composition include various metal powders, powders of inorganic acid metal salts (e.g., calcium carbonate, zinc borate, calcium borate, zinc stannate, calcium sulfate, and barium sulfate), powders of metal oxides (e.g., magnesium oxide, iron oxide, titanium oxide, zinc oxide, and alumina), powders of metal hydroxides (e.g., aluminum hydroxide, magnesium hydroxide, zirconium hydroxide, and alumina hydrate (boehmite)), powders of metal sulfides (e.g., zinc sulfide, molybdenum sulfide, and tungsten sulfide), silver nanowires, carbon fibers, glass fibers, carbon nanotubes, graphene, and ceramic materials such as silica.

These (A) to (C) can be mixed in an appropriate amount depending on the intended use.

To obtain a polyether nitrile resin composition molding material having high melt flowability by melt-molding the polyether nitrile resin composition in the present invention under exclusion of oxygen or in an inert atmosphere, the amount of (A) to (C) is preferably 90 wt% or less relative to the total weight of the polyether nitrile resin composition.

The polyether nitrile obtained by the method of the present invention can be processed into a molding material by the above-described method or subjected to the production of a molded article or a part using the molding material, and has heat resistance, chemical resistance, flame resistance, and high mechanical properties. The polyether nitrile can be used in, for example, electric and electronic applications such as personal computers and semiconductor parts, automotive applications such as gears, bearings, and housings around engines, or applications in the medical equipment and aerospace fields.

## EXAMPLES

The present invention will now be described more specifically with reference to Examples, but it should be noted that the present invention is not limited to these Examples.

Analysis methods in the present invention are as follows.

<Analysis methods>

(1) Method of measuring reduced viscosity $\eta_{red}$ (dL/g)

As described above, 0.1 g of a sample was dissolved in about 5 g of parachlorophenol at 180°C, and the solution was transferred to a 10 mL measuring flask. The flask was made up to volume at 40°C, and the resultant was weighed out with a 5 mL whole pipette and put into an Ostwald tube (capillary tube, 0.75 mm). This was allowed to stand in a constant-temperature bath at 40.0°C for 15 minutes, and a flow time T was measured to make a calculation by the

following calculation formula.

[Calculation formula]

$$\text{Reduced viscosity } \eta_{red} = \{(T/T_0) - 1\}/C$$

C: concentration (g/dL) of solution
T: flow time (s) of sample solution
$T_0$: flow time (s) of parachlorophenol

(2) Method of determining polymer reduced viscosity during polycondensation

A polycondensation reaction solution during polycondensation was experimentally sampled in advance at various desired time points, and the stirring torque value from a torque meter at each sampling time point and the reduced viscosity of a polymer obtained by washing each sample were actually measured. From the actually measured values, the following relationship between the stirring torque and the polymer reduced viscosity was determined, and the reduced viscosity during polycondensation was determined by estimation from the stirring torque.

Reduced viscosity (dl/g) = A × stirring torque (N·m) + B

A and B are values that depend on the reactor, stirring blade, motor, and reaction conditions used.

(3) Thermal properties: melting point and glass transition temperature (Tg)

Using a differential scanning calorimeter (DSC-60, manufactured by Shimadzu Corporation), thermal properties of a sample were measured under the following conditions.
Conditions: sample, about 10 mg; nitrogen flow rate, 50 mL/min; temperature change range, 50°C to 450°C; temperature change rate, 10°C/min.

(4) Measurement of molecular weight

The measurement of the molecular weight of a polymer was performed with the following apparatus under the following conditions using a solution obtained by 10-fold diluting a 1% p-chlorophenol solution of the polymer with chloroform.

Apparatus: gel permeation chromatograph: 515 HPLC pump, 717plus Autosampler, 2487 UV/Vis Detector (manufactured by Nihon Waters K.K.)
Column: 2 × PLgel 5μ MIXED-D, 7.5 × 300 mm (Agilent Technologies)
Column temperature: 40°C
Flow rate: 1.0 mL/min
Injection volume: 2.5 μL
Detection: UV/Vis Detector: 254 nm
Column calibration: monodisperse polystyrene (EasiCal PS-1, Agilent Technologies)
Molecular weight calibration: relative calibration method (relative to polystyrene)
Analysis software: Empowers (manufactured by Nihon Waters K.K.)

<Comparative Example 1>

In a four-necked 3-liter reactor equipped with a mechanical stirrer with a torque meter, a thermometer, a dry nitrogen inlet, and a reflux condenser, 298.45 g (1.735 mol) of 2,6-dichlorobenzonitrile (hereinafter referred to as "DCBN"), 323.08 g (1.735 mol) of 4,4'-biphenol (hereinafter referred to as "BP"), 251.79 g (1.822 mol) of anhydrous potassium carbonate, 60 g of toluene, and 1562 g of anhydrous sulfolane were loaded. This mixture was heated from room temperature under a stream of nitrogen, and with stirring at 250 rpm, the temperature was increased to 160°C with heating under reflux. At 130°C or higher, carbon dioxide was evolved from the reaction of potassium carbonate and biphenol. After 3 hours at 160°C, the oligomerization reaction of "DCBN" and "BP" was completed, and the cooling water in the reflux condenser was then replaced with warm water to remove water and toluene through an outlet, whereby the

temperature was raised to 220°C to effect polycondensation. After the temperature was raised to 220°C, the reaction was terminated at the time when the reduced viscosity calculated from a stirring torque reached 2.0 at 1.5 hours after the reduced viscosity calculated from a stirring torque reached 1, and a polycondensation reaction product was taken out from the bottom of the reactor and allowed to cool and solidify.

The relationship between stirring torque and polymer reduced viscosity during polycondensation using the above equipment under the above conditions was known in advance by experiment to be expressed by the following formula, which is as follows.

Reduced viscosity (dl/g) = 6.87 × stirring torque (N·m) + 0.684

Using this formula, a polymer reduced viscosity was estimated from a measured value on the torque meter during polycondensation. When the desired value was exhibited, the termination of the reaction and the taking out were judged.

Fig. 1 shows how the reduced viscosity calculated from a stirring torque varies with time after the reduced viscosity calculated from a stirring torque in this reaction has reached 1.

After this solid product was pulverized with a Waring blender, this substance was washed several times with acetone and distilled water and dried in a vacuum oven at 120°C for 16 hours to obtain 470 g of a polyether nitrile powder (yield, 95%).

At 1.5 hours after the reaction temperature was raised to 220°C, that is, the actually measured reduced viscosity of the polymer powder obtained was 2.0.

The polymer powder obtained had a number-average molecular weight (Mn) of 28,200, a weight-average molecular weight (Mw) of 71,100, Mw/Mn of 2.52, a melting point of 364°C, and a glass transition temperature (Tg) of 215°C.

The data of the polycondensation time, the molecular weight of the polymer obtained, and the polymer reduced viscosity in Comparative Example 1 are listed in Table 1 below.

<Example 1>

As in "Comparative Example 1" above, but after the reaction temperature was raised to 220°C, the reaction was not terminated at the time when the reduced viscosity calculated from a stirring torque reached 2.0 at 1.5 hours after the reduced viscosity calculated from a stirring torque reached 1, and the reaction was continued at 220°C.

As shown in Fig. 2, the reduced viscosity calculated from a stirring torque peaked at 2.8 and then decreased, and the calculated reduced viscosity value reached 2.3. The reaction solution was sampled at 3 hours after the reduced viscosity calculated from a stirring torque reached 1. The reaction was terminated after 5 hours at which time the calculated reduced viscosity value further reached 1.8, and the polycondensation reaction product was taken out. Thereafter, the post-treatment was performed in the same manner as in "Comparative Example 1" above.

Fig. 2 shows how the reduced viscosity calculated from a stirring torque varies with time, with the time when the reduced viscosity calculated from a stirring torque in this reaction has reached 1 taken as time 0.

At 3 hours after the reaction temperature was raised to 220°C, the reduced viscosity was 2.2, and the actually measured reduced viscosity of a polymer at the time when the reaction was further continued for 5 hours, that is, the polymer powder obtained, was 1.9.

The polymer powder obtained had a number-average molecular weight (Mn) of 24,200, a weight-average molecular weight (Mw) of 73,400, and Mw/Mn of 3.03.

The polymer powder had a melting point of 364°C and a glass transition temperature (Tg) of 215°C.

The data of the polycondensation time, the molecular weight of the polymer obtained, and the polymer reduced viscosity in Example 1 are listed in Table 1 below.

<Example 2>

The reaction was performed in the same manner as in "Example 1" above except that the reaction was continued for 8 hours from time 0, which was the time when the reduced viscosity calculated from a stirring torque reached 1.

Fig. 3 shows how the reduced viscosity calculated from a stirring torque varies with time, with the time when the reduced viscosity calculated from a stirring torque in this reaction has reached 1 taken as time 0.

The actually measured reduced viscosity of the polymer powder obtained by continuing the reaction for 8 hours after raising the reaction temperature to 220°C was 1.55.

The polymer powder obtained had a number-average molecular weight (Mn) of 22,200, a weight-average molecular weight (Mw) of 72,900, and Mw/Mn of 3.28.

The polymer powder had a melting point of 364°C and a glass transition temperature (Tg) of 215°C.

The data of the polycondensation time, the molecular weight of the polymer obtained, and the polymer reduced viscosity in Example 2 are listed in Table 1 below.

[Table 1]

| | Polymerization time (h) | Molecular weight | | | Reduced viscosity (η) |
|---|---|---|---|---|---|
| | | Mw | Mn | Mw/Mn | |
| Example 1 | 5.0 | 73,400 | 24,200 | 3.03 | 1.91 |
| | 3.0 | - | - | - | 2.19 |
| Example 2 | 8.0 | 72, 900 | 22,200 | 3.28 | 1.55 |
| Comparative Example 1 | 1.5 | 71,100 | 28,200 | 2.52 | 1.99 |

As shown in Figs. 2 and 3, Example 1 and Example 2 are specific examples of the production method according to the present invention in which heating was continued until the polymer reduced viscosity decreased after exceeding 1 and reaching a maximum, and Comparative Example 1 is an example in which heating was stopped after the polymer reduced viscosity exceeded 1 but before a maximum was reached.

As shown in Table 1, as compared with Comparative Example 1, Example 1 and Example 2, each being the production method according to the present invention, provided polymers having a high weight-average molecular weight despite their low reduced viscosity and thus were shown to be production methods by which a polyether nitrile having a high molecular weight and high flowability can be obtained.

## Claims

1. A method for producing a polyether nitrile, comprising allowing an aromatic dihydroxy compound (I) and a dihalobenzonitrile compound (II) to undergo a polycondensation reaction in the presence of a basic compound, wherein the reaction is continued to a region where a reduced viscosity of the polyether nitrile decreases after increasing beyond 1 as the polycondensation reaction proceeds and reaching a maximum.

2. The method for producing a polyether nitrile according to Claim 1, wherein the reaction is continued to a region where the reduced viscosity decreases after increasing beyond 1.5 as the polycondensation reaction proceeds and reaching a maximum.

3. The method for producing a polyether nitrile according to Claim 1, wherein the reaction is continued to a region where the reduced viscosity decreases after increasing beyond 1.75 as the polycondensation reaction proceeds and reaching a maximum.

4. The method for producing a polyether nitrile according to Claim 1, wherein the reaction is continued to a region where the reduced viscosity decreases after increasing beyond 2.0 as the polycondensation reaction proceeds and reaching a maximum.

5. The method for producing a polyether nitrile according to Claim 1, wherein the aromatic dihydroxy compound (I) is a compound represented by general formula (1) below, and the dihalobenzonitrile compound (II) is a compound represented by general formula (2) below.
[Chem. 1]

**HO-R-OH (1)**

(In the formula, R represents a divalent group represented by general formula (1a) below or general formula (1b) below.)

[Chem. 2]

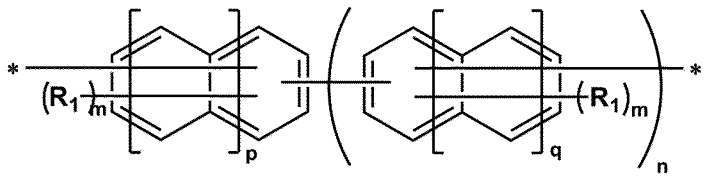

(1a)

(In the formula, each $R_1$ independently represents a linear or branched alkyl group having 1 to 6 carbon atoms, a cyclic alkyl group having 5 or 6 carbon atoms, or a phenyl group, each m independently represents an integer of 0 to 4, n represents 0 or 1, p and q each independently represent 0, 1, or 2, and each * represents a bonding position.)

[Chem. 3]

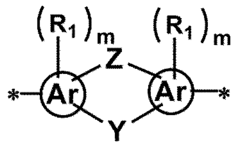

(1b)

(In the formula, $R_1$ and m are as defined in general formula (1a), Y represents an oxygen atom, a sulfur atom, a sulfonyl group, a carbonyl group, an alkylidene group having 1 to 15 carbon atoms, a fluorine-containing alkylidene group having 2 to 15 carbon atoms, a cycloalkylidene group having 5 to 15 carbon atoms, a phenylmethylidene group, a phenylethylidene group, a phenylene group, or a fluorenylidene group, Z represents an oxygen atom, a sulfur atom, or non-bridging, each Ar independently represents an aryl group having 6 to 8 carbon atoms, and each * represents a bonding position.)

[Chem. 4]

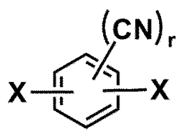

(2)

(In the formula, each X independently represents a halogen atom, and r represents an integer of 1 to 4.)

**6.** The method for producing a polyether nitrile according to Claim 1, wherein R in the compound represented by general formula (1) is general formula (1a') below or general formula (1a") below.

[Chem. 5]

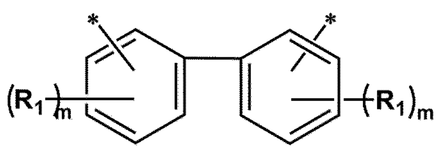

(1a')

[Chem. 6]

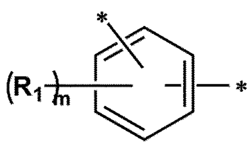

(1a")

(In the formula, $R_1$, m, and * are as defined in general formula (1a)).

7. The method for producing a polyether nitrile according to Claim 1 or 5, wherein in the polycondensation reaction, a molar ratio between the aromatic dihydroxy compound (I) and the dihalobenzonitrile compound (II) is in a range of (I):(II) = 1:0.99 to 1:1.005.

8. The method for producing a polyether nitrile according to Claim 1, wherein in the polycondensation reaction, the basic compound is an alkali metal compound and is used in an amount ranging from 2 to 4 times an amount of the aromatic dihydroxy compound (I) on a molar basis in terms of alkali metal ions contained in the alkali metal compound.

9. The method for producing a polyether nitrile according to Claim 1, wherein the polyether nitrile to be obtained has a weight-average molecular weight (Mw) in a range of 40,000 to 1,000,000 and a weight-average molecular weight (Mw) to number-average molecular weight (Mn) ratio (Mw/Mn) in a range of 2.7 to 4.0.

FIG. 1

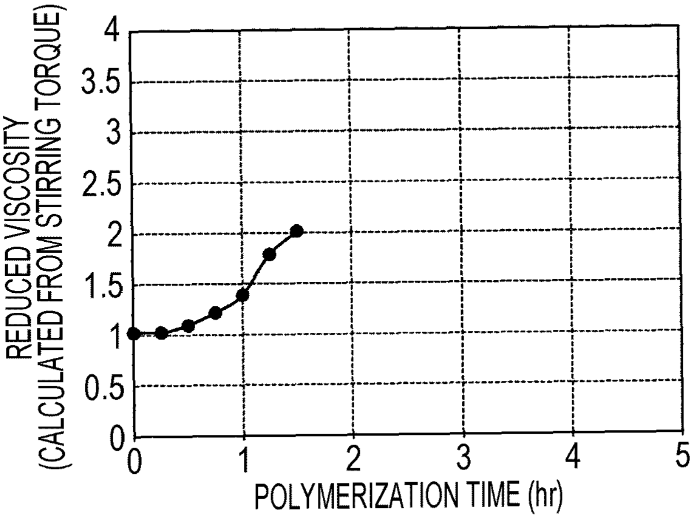


FIG. 2

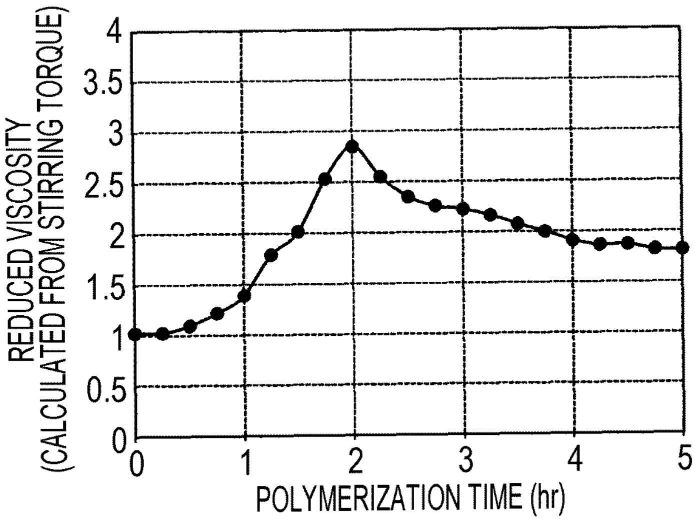


FIG. 3

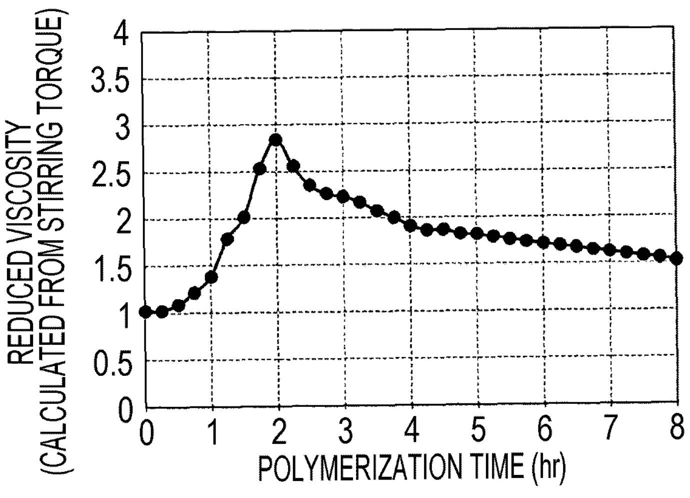

INTERNATIONAL SEARCH REPORT

International application No.
**PCT/JP2022/039942**

**A. CLASSIFICATION OF SUBJECT MATTER**

***C08G 65/40***(2006.01)i
FI: C08G65/40

According to International Patent Classification (IPC) or to both national classification and IPC

**B. FIELDS SEARCHED**

Minimum documentation searched (classification system followed by classification symbols)

C08G65/00-67/48; C08L1/00-101/16; C08K3/00-13/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 08-090557 A (IDEMITSU MATERIAL KK) 09 April 1996 (1996-04-09) claims | 1-9 |
| A | JP 60-147439 A (IDEMITSU KOSAN KK) 03 August 1985 (1985-08-03) claims | 1-9 |
| A | JP 61-055120 A (IDEMITSU KOSAN KK) 19 March 1986 (1986-03-19) claims | 1-9 |
| A | JP 11-158264 A (IDEMITSU PETROCHEM CO LTD) 15 June 1999 (1999-06-15) claims | 1-9 |
| A | JP 63-189435 A (IDEMITSU KOSAN KK) 05 August 1988 (1988-08-05) claims | 1-9 |
| A | JP 05-339364 A (IDEMITSU KOSAN KK) 21 December 1993 (1993-12-21) claims | 1-9 |
| A | JP 61-231027 A (IDEMITSU KOSAN KK) 15 October 1986 (1986-10-15) claims | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/039942**

**C. DOCUMENTS CONSIDERED TO BE RELEVANT**

| Category* | Citation of document, with indication, where appropriate, of the relevant passages | Relevant to claim No. |
|---|---|---|
| A | JP 04-345619 A (ASAHI CHEM IND CO LTD) 01 December 1992 (1992-12-01) claims | 1-9 |
| A | JP 05-271678 A (NSK LTD.) 19 October 1993 (1993-10-19) claims | 1-9 |
| A | CN 112625233 A (UNIVERSITY OF ELECTRONIC SCIENCE AND TECHNOLOGY OF CHINA) 09 April 2021 (2021-04-09) claims | 1-9 |

Form PCT/ISA/210 (second sheet) (January 2015)

**INTERNATIONAL SEARCH REPORT**
**Information on patent family members**

International application No.
**PCT/JP2022/039942**

| Patent document cited in search report | Publication date (day/month/year) | Patent family member(s) | Publication date (day/month/year) |
|---|---|---|---|
| JP 08-090557 A | 09 April 1996 | (Family: none) | |
| JP 60-147439 A | 03 August 1985 | (Family: none) | |
| JP 61-055120 A | 19 March 1986 | (Family: none) | |
| JP 11-158264 A | 15 June 1999 | (Family: none) | |
| JP 63-189435 A | 05 August 1988 | (Family: none) | |
| JP 05-339364 A | 21 December 1993 | (Family: none) | |
| JP 61-231027 A | 15 October 1986 | US 4640975 A<br>claims<br>EP 187638 A1 | |
| JP 04-345619 A | 01 December 1992 | (Family: none) | |
| JP 05-271678 A | 19 October 1993 | (Family: none) | |
| CN 112625233 A | 09 April 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60147439 A
- JP 61055120 A